# EUROPÄISCHE PATENTSCHRIFT

(11) **EP 3 607 263 B1**
(45) Veröffentlichungstag und Bekanntmachung des Hinweises auf die Patenterteilung: **28.07.2021**
(21) Anmeldenummer: 18735257.0
(22) Anmeldetag: 27.06.2018
(51) Int. Cl.: F41G 1/00, G06F 1/16, G09G 3/00

(54) **ANZEIGEVORRICHTUNG FÜR EINE EINSATZKRAFT ZUR ANZEIGE VON INFORMATIONS-INHALTEN VERSCHIEDENER INFORMATIONS-TYPEN EINES FÜHRUNGSSYSTEMS**
DISPLAY APPARATUS FOR AN EMERGENCY SERVICE MEMBER FOR DISPLAYING INFORMATION CONTENT OF DIFFERENT INFORMATION TYPES FROM A GUIDANCE SYSTEM
DISPOSITIF D'AFFICHAGE D'UNE FORCE D'INTERVENTION POUR AFFICHER DES CONTENUS INFORMATIFS DE DIFFÉRENTS TYPES D'INFORMATIONS D'UN SYSTÈME DE GUIDAGE

(30) Priorität: 27.06.2017 DE 102017114278
(43) Veröffentlichungstag der Anmeldung: 12.02.2020
(73) Patentinhaber: Rheinmetall Electronics GmbH, 28309 Bremen (DE)
(72) Erfinder: NOETZEL, Christian, 28309 Bremen (DE)
(74) Vertreter: Horn Kleimann Waitzhofer Patentanwälte PartG mbB
(86) Internationale Anmeldenummer: PCT/EP2018/067258
(87) Internationale Veröffentlichungsnummer: WO 2019/002373

(56) Entgegenhaltungen:
- WO-A1-02/31578
- US-A1- 2015 061 974

## Beschreibung

Die vorliegende Erfindung betrifft eine Anzeigevorrichtung für eine Einsatzkraft zur Anzeige von Informations-Inhalten verschiedener Informations-Typen eines Führungssystems. Des Weiteren betrifft die vorliegende Erfindung eine Anordnung mit einem Führungssystem zum Führen einer Mehrzahl von Einsatzkräften und einer Mehrzahl von Anzeigevorrichtungen.

Es sind beispielsweise Uhren als Anzeigevorrichtungen bekannt, über die ein Informationssystem oder Führungssystem Informationen an einen Nutzer der Uhr übertragen kann. Eine solche Uhr als Informationsempfänger hat allerdings den Nachteil, dass der Nutzer der Uhr zur Aufnahme der durch die Uhr dargestellten Informationen seine Aufmerksamkeit auf die Uhr richten muss. Hierdurch kann der Nutzer von anderen Tätigkeiten oder Aufgaben, insbesondere während eines Einsatzes, abgelenkt werden. Auch die Reaktionsfähigkeit des Nutzers wird beim Blicken auf die Uhr zur Aufnahme der Informationen nachteiliger Weise vermindert.

Das Dokument WO 02/31578 A1 zeigt ein Informationssystem mit einer Signalerfassungsvorrichtung, die von mindestens einem eine Netzhaut aufweisende Auge zurückreflektierte Signale erfasst, mit einer Ausgabevorrichtung, die Informationen in Zusammenarbeit mit einer Informationsvorrichtung und in Abhängigkeit von den erfassten Signalen zur Verfügung stellt, wobei die Ausgabevorrichtung eine scannende Projektionsvorrichtung umfasst, die mindestens ein Teil der Informationen auf die Netzhaut projiziert. Dabei umfasst die Signalerfassungsvorrichtung eine scannende Abtastvorrichtung, die in einem ersten Scanvorgang eine mindestens partielle Erfassung eines Netzhautreflexbildes der Netzhaut ausführt und in einem späteren Scanvorgang eine weniger umfangreiche Erfassung des Netzhautreflexbildes vornimmt.

Das Dokument US 2015/061974 A1 zeigt eine am Kopf montierte Anzeige, die es einem Benutzer ermöglicht, ein virtuelles Bild und eine externe Szenerie visuell zu erkennen.

Gemäß einem ersten Aspekt wird eine Anzeigevorrichtung für eine Einsatzkraft zur Anzeige von Informations-Inhalten verschiedener Informations-Typen eines Führungssystems vorgeschlagen. Die Anzeigevorrichtung umfasst ein durch die Einsatzkraft tragbares Display aufweisend eine Mehrzahl von visuell unterscheidbaren Segmenten, wobei einem jeden der Segmente zumindest einer der Informations-Typen zugewiesen ist, wobei das jeweilige Segment zur visuellen Ausgabe eines aktuellen Informations-Inhalts des dem Segment zugewiesenen Informations-Typs eingerichtet ist. Ferner umfasst die Anzeigevorrichtung eine mit dem Führungssystem koppelbare Ansteuer-Einheit zum Ansteuern des Displays. Die Anzeigevorrichtung ist als eine vor dem Gesicht der Einsatzkraft tragbare Maske ausgebildet, wobei die visuell unterscheidbaren Segmente bei einem Tragen der Maske durch die Einsatzkraft in einem peripheren Sichtfeld der Einsatzkraft angeordnet sind. Alternativ ist die Anzeigevorrichtung als eine durch die Einsatzkraft tragbare Brille oder Brillen-Erweiterung ausgebildet, wobei die visuell unterscheidbaren Segmente bei einem Tragen der Brille oder der Brillen-Erweiterung in einem peripheren Sichtfeld der Einsatzkraft angeordnet sind. Eine Anzahl der Segmente der Mehrzahl von visuell unterscheidbaren Segmenten ist dazu eingerichtet, einen Bereich außerhalb des Sichtbildes der Einsatzkraft, insbesondere einen Bereich hinter der Einsatzkraft, mittels der visuellen Ausgabe der Informations-Inhalte der den Segmenten der Anzahl zugewiesenen Informations-Typen abzubilden.

Die Informations-Typen umfassen beispielsweise einen oder mehrere Navigations-Punkte, einen oder mehrere Navigationsbereiche, eine oder mehrere Bedrohungen für die Einsatzkraft, vorbestimmte Ziele und/oder aktive Zuweisungen durch das Führungssystem, ein Red-Force-Tracking und/oder ein Blue-Force-Tracking. Vorzugsweise sind den unterschiedlichen Informations-Typen unterschiedliche Farben bei der visuellen Darstellung durch die Segmente zugeordnet.

Die visuell unterscheidbaren Segmente sind insbesondere für die Einsatzkraft, das heißt für einen menschlichen Benutzer, visuell unterscheidbar. Vorzugsweise sind die einzelnen Segmente des Displays durch die Ansteuer-Einheit einzeln ansteuerbar.

Wenn beispielsweise ein Informations-Typ eine Bedrohung ist und sich die Bedrohung im linken Bereich des Sichtbereichs der Einsatzkraft befindet, so wird ein in dem Display im linken Bereich angeordnetes Segment, das diesem Informations-Typ zugeordnet ist, rot leuchten. Damit ist der Einsatzkraft, insbesondere in seinem peripheren Sichtfeld durch den aktuellen Informations-Inhalt des roten Leuchtens des Segments signalisiert, dass sich links vor ihr eine Bedrohung befindet.

Durch die vorliegende Anzeigevorrichtung wird die Effektivität der Einsatzkraft während eines Einsatzes deutlich erhöht, da es möglich ist, aktuelle Informations-Inhalte verschiedener Informations-Typen von dem Führungssystem der Einsatzkraft über das Display unmittelbar bereitzustellen. Durch die vorliegende Anzeigevorrichtung wird die Einsatzkraft durch periphere Wahrnehmung bei minimaler Einschränkung der Einsatzkraft unterstützt. Auch können durch die vorgeschlagene Anzeigevorrichtung der Befehlsprozess und der Steuerprozess zwischen dem Führungssystem und der Einsatzkraft beschleunigt werden.

Das Display der Anzeigevorrichtung und die Ansteuer-Einheit der Anzeigevorrichtung sind kostengünstig herstellbar, energieeffizient und haben nur ein geringes Gewicht für die Einsatzkraft.

Das Display ist vorzugsweise als ein auf dem Kopf der Einsatzkraft tragbares Display ausgebildet.

Die Ansteuer-Einheit ist mit dem Führungssystem insbesondere über eine oder mehrere Kommunikationsverbindungen koppelbar bzw. verbindbar.

Insbesondere ist die Ansteuer-Einheit über zumindest zwei getrennte, unabhängige Kommunikationsverbindungen zur Schaffung redundanter Kommunikationsstränge mit dem Führungssystem koppelbar. Beispiele für einen hierzu verwendbaren Kommunikations-Standard umfassen GPRS, UMTS, LTE, WLAN, Bluetooth, TETRA-Funk, LoRa und ZigBee.

Die Einsatzkraft ist beispielsweise ein Soldat. Weitere Beispiele für Einsatzkräfte sind Feuerwehrleute, Polizisten, THW-Mitarbeiter und dergleichen.

Das Führungssystem kann auch als Leitstelle oder Informationssystem bezeichnet werden. Das Display kann auch als Segmentanzeige bezeichnet werden.

Gemäß einer Ausführungsform ist die Ansteuer-Einheit dazu eingerichtet, Signale aufweisend die aktuellen Informations-Inhalte für die Informations-Typen von dem Führungssystem zu empfangen und das Display mittels in Abhängigkeit der empfangenen Signale generierter Ansteuer-Befehle zur visuellen Ausgabe der aktuellen Informations-Inhalte anzusteuern.

Über die Signale kann die Anzeigevorrichtung die aktuellen Informations-Inhalte für die verschiedenen Informations-Typen von dem Führungssystem empfangen. Die Ansteuer-Einheit steuert dann das Display entsprechend an, dass alle empfangenen Informations-Inhalte, insbesondere in Echtzeit, dem Benutzer über die Segmente des Displays angezeigt werden.

Gemäß einer weiteren Ausführungsform ist die Ansteuer-Einheit zur Zuweisung der Informations-Typen auf die Segmente des Displays eingerichtet.

Vorteilhafterweise kann die Ansteuer-Einheit die Zuweisung des jeweiligen Informations-Typs auf die Segmente steuern. Wenn sich beispielweise die Position einer Bedrohung relativ zu der Einsatzkraft ändert, so wird die Ansteuer-Einheit den Informations-Typ Bedrohung entsprechend dieser Ortsänderung auf eine Änderung des zugewiesenen Segments abbilden. Das heißt, wenn die Bedrohung beispielsweise sich aus einem linken Bereich relativ zu der Einsatzkraft in einen mittigen Bereich relativ zu der Einsatzkraft bewegt, so wird die Ansteuer-Einheit das für den Informations-Typ Bedrohung zugewiesene Segment von einem linken Bereich des Displays auf einen mittigen Bereich des Displays ändern.

Gemäß einer weiteren Ausführungsform ist die Ansteuer-Einheit ferner dazu eingerichtet, eine Darstellungs-Art für den jeweiligen, einem der Segmente zugewiesenen Informations-Typen zu bestimmen.

Beispielsweise ist die Ansteuer-Einheit in dieser Ausführungsform dazu eingerichtet, im Rahmen der Bestimmung der Darstellungs-Art eine Farbe und/oder eine Pulsdauer des Segments zu ändern. Wenn beispielsweise der Informations-Typ eine Bedrohung repräsentiert, so kann die Ansteuer-Einheit die Farbe Rot für den Informations-Typ bestimmen. Nähert sich die Bedrohung der Einsatzkraft weiter an, so kann die Ansteuer-Einheit bestimmen, dass das rot leuchtende Segment zusätzlich pulsiert. Mit jeder weiteren Annäherung der Bedrohung an die Einsatzkraft kann die Frequenz des pulsierenden roten Segments durch die Ansteuer-Einheit erhöht werden.

Gemäß einer weiteren Ausführungsform ist die Ansteuer-Einheit dazu eingerichtet, die Informations-Typen auf die Segmente in Abhängigkeit eines von dem Führungssystem übermittelten externen Steuerbefehls, einer bestimmten Kopfausrichtung der Einsatzkraft und/oder einer ermittelten Position der Einsatzkraft zuzuweisen.

Wenn beispielsweise die Ansteuer-Einheit einen externen Steuerbefehl zur Ausgabe einer Zuweisung oder eines Befehls von dem Führungssystem an die Einsatzkraft erhält, so kann die Ansteuer-Einheit für die Ausgabe dieses Befehls oder dieser Zuweisung ein bestimmtes Segment zur visuellen Ausgabe bestimmen. Des Weiteren kann die Ansteuer-Einheit die Zuordnung der Informations-Typen auf die Segmente in Abhängigkeit einer Änderung der Kopfausrichtung der Einsatzkraft bestimmen. Wenn beispielsweise, wie oben dargestellt, sich eine Bedrohung im linken Sichtbereich der Einsatzkraft befindet, so wird im linken Bereich des Displays ein entsprechendes Segment rot leuchten. Wenn die Einsatzkraft dann ihren Kopf nach links bewegt und die Bedrohung ihre Position nicht ändert, so wird die Ansteuer-Einheit ein Segment im mittigen Bereich des Displays für den Informations-Typ Bedrohung zuweisen. Entsprechend kann die Ansteuer-Einheit die Zuweisung der Informations-Typen auf die Segmente auch in Abhängigkeit einer Änderung der Position der Einsatzkraft, beispielsweise einer satellitenbestimmten Position der Einsatzkraft, ändern.

Gemäß einer weiteren Ausführungsform umfasst die Anzeigevorrichtung eine Bestimmungs-Einheit zum Bestimmen der Kopfausrichtung der Einsatzkraft, wobei die Bestimmungs-Einheit einen Kompass und/oder ein Gyrometer aufweist.

Gemäß einer weiteren Ausführungsform umfasst die Anzeigevorrichtung eine Ermittlungs-Einheit zum Ermitteln der Position der Einsatzkraft. Die Ermittlungs-Einheit kann beispielsweise Sensoren, wie Gyrosensoren, Beschleunigungssensoren, Schrittzähler, Höhenmesser oder dergleichen, umfassen.

Gemäß einer weiteren Ausführungsform ist die Ansteuer-Einheit dazu eingerichtet, einem bestimmten Segment der Mehrzahl von Segmenten einen ersten Informations-Typ und zumindest einen zweiten Informations-Typ zuzuweisen.

Insbesondere kann die Ansteuer-Einheit einem bestimmten Segment auch mehrere Informations-Typen zuweisen. Beispielsweise kann die Ansteuer-Einheit einem Segment nicht nur eine Blue-Force-Anzeige (beispielsweise über die Farbe Blau) zuordnen, sondern auch einen Bewegungsvektor der Blue-Force (beispielsweise über einen dargestellten Pfeil in dem Segment) zuweisen.

Gemäß einer weiteren Ausführungsform ist die Mehrzahl von visuell unterscheidbaren Segmenten in einer Reihe angeordnet.

Die Reihe der Segmente kann beim Tragen der Anzeigevorrichtung durch die Einsatzkraft insbesondere nahe den Augen, beispielsweise ein wenig oberhalb der Augen oder ein wenig unterhalb der Augen, in einem peripheren Sichtbereich der Einsatzkraft angeordnet werden. Die Anordnung der Reihe von Segmenten in dem peripheren Sichtbereich der Einsatzkraft hat den Vorteil, dass gegenüber einer Lösung außerhalb des Sichtbereichs eine hohe Reaktionsmöglichkeit für den Nutzer bereitgestellt wird. Die Anordnung der Reihe von Segmenten in dem peripheren Sichtbereich der Einsatzkraft hat ferner den Vorteil, dass gegenüber einer Anordnung in einem aktiven Sichtbereich der Einsatzkraft eine minimale Einschränkung für die Einsatzkraft geschaffen wird.

Gemäß einer weiteren Ausführungsform ist die Mehrzahl von visuell unterscheidbaren Segmenten in einer Matrix angeordnet.

Insbesondere ist die Anzahl der Zeilen der Matrix deutlich geringer als die Anzahl der Spalten der Matrix, so dass das Display mit den in einer Matrix angeordneten Segmenten in einem Peripheriebereich des Sichtbereichs der Einsatzkraft anordnenbar ist.

Gemäß einer weiteren Ausführungsform ist die Reihe der Segmente dazu eingerichtet, ein horizontales Sichtbild der Einsatzkraft mittels der visuellen Ausgabe der Informations-Inhalte der den Segmenten zugewiesenen Informations-Typen abzubilden.

Die Anzeigevorrichtung ist als eine vor dem Gesicht der Einsatzkraft tragbare Maske ausgebildet. Dabei sind die visuell unterscheidbaren Segmente bei einem Tragen der Maske durch die Einsatzkraft in einem peripheren Sichtfeld der Einsatzkraft angeordnet.

Die Maske kann insbesondere über Riemen mit zwei Kopfhörern für die Ohren der Einsatzkraft und über zumindest einen weiteren Riemen zum Spannen der Kopfhörer und der Maske über den Kopf verbunden sein. Die Maske kann des Weiteren ein eingebettetes Mikrophon umfassen, so dass die Einsatzkraft über das Mikrophon und die Kopfhörer mit dem Führungssystem über Sprache kommunizieren kann.

Dabei sind die visuellen unterschreibaren Segmente bei dem Tragen der Maske durch die Einsatzkraft derart angeordnet, dass sie ausschließlich in dem peripheren Sichtfeld der Einsatzkraft und insbesondere nicht in dem aktiven Sichtfeld der Einsatzkraft angeordnet sind.

Die Segmente sind damit vorzugsweise ausschließlich in dem peripheren Sichtbereich und nicht in dem aktiven Sichtbereich, das heißt der Nutzer kann sie zwar erkennen, aber die Segmente und ihre Anzeige stören die Einsatzkraft nur minimal.

Alternativ zu der Ausbildung als Maske ist die Anzeigevorrichtung als eine durch die Einsatzkraft tragbare Brille oder Brillen-Erweiterung ausgebildet, wobei die visuell unterscheidbaren Segmente bei einem Tragen der Brille oder der Brillen-Erweiterung in einem peripheren Sichtfeld der Einsatzkraft angeordnet sind.

Beispielsweise können die Segmente oberhalb der Gläser der Brille angeordnet sein. Als Brillen-Erweiterung können die Segmente beispielsweise auf eine Brille aufsteckbar sein oder mit einem Rahmen verbunden sein, der in x-Richtung, in y-Richtung und/oder in z-Richtung verschiebbar ist.

Gemäß einer weiteren Ausführungsform ist die Brille oder die Brillen-Erweiterung derart ausgebildet, dass eine Ausrichtung der Segmente in x-Richtung, in y-Richtung und in z-Richtung einstellbar ist.

Gemäß einer weiteren Ausführungsform sind die visuell unterscheidbaren Segmente ringförmig verteilt angeordnet. Insbesondere bilden die Segmente einen Ring aus. Vorzugsweise sind die Segmente des Displays biegsam.

Gemäß einer weiteren Ausführungsform sind die ringförmig verteilt angeordneten Segmente in einem Richtsystem einer Waffe oder in einem Zielfernrohr integriert.

Gemäß einer weiteren Ausführungsform sind die ringförmig verteilt angeordneten Segmente in einem Aufklärungsmittel oder in einem Fernglas angeordnet.

Eine Anzahl der Segmente der Mehrzahl von visuell unterscheidbaren Segmenten ist dazu eingerichtet, einen Bereich außerhalb des Sichtbildes der Einsatzkraft, insbesondere einen Bereich hinter der Einsatzkraft, mittels der visuellen Ausgabe der Informations-Inhalte der den Segmenten der Anzahl zugewiesenen Informations-Typen abzubilden.

Dadurch ist es möglich, bestimmten Segmenten, nämlich den Segmenten besagter Anzahl, Bereiche außerhalb des Sichtbildes der Einsatzkraft zuzuordnen und damit für die Einsatzkraft Bereiche über diese Segmente sichtbar zu machen, die er tatsächlich ohne eine Drehung seines Körpers und/oder seines Kopfes nicht sehen könnte. Insbesondere sind diese Bereiche solche Bereiche, welche hinter der Einsatzkraft liegen.

Gemäß einer weiteren Ausführungsform ist ein jedes Segment der beiden äußeren Segmente der Mehrzahl von visuell unterscheidbaren Segmenten dazu eingerichtet, einen bestimmten Bereich außerhalb des Sichtbildes der Einsatzkraft, insbesondere einen Bereich hinter der Einsatzkraft, mittels der visuellen Ausgabe der Informations-Inhalte der dem jeweiligen Segment zugewiesenen Informations-Typen abzubilden.

Beispielsweise kann das linke äußere Segment einem linken Bereich hinter der Einsatzkraft zugewiesen werden, wohingegen dem rechten äußeren Segment ein rechter Bereich hinter der Einsatzkraft zugewiesen werden kann. Somit können der Einsatzkraft über die äußeren Segmente nicht nur Bereiche außerhalb seines Sichtbereiches, insbesondere hinter ihm, sichtbar gemacht werden, sondern er kann sogar verschiedene Bereiche außerhalb seines Sichtbereiches differenziert wahrnehmen. Das heißt beispielsweise, dass ein Feind innerhalb des linken Bereiches hinter der Einsatzkraft durch das linke äußere Segment für die Einsatzkraft sichtbar gemacht wird, wohingegen ein Feind in dem rechten Bereich hinter der Einsatzkraft mittels des rechten äußeren Segmentes der Anzeigevorrichtung für die Einsatzkraft sichtbar gemacht wird.

Gemäß einer weiteren Ausführungsform ist die Mehrzahl von visuell unterscheidbaren Segmenten an einem Helm für die Einsatzkraft angeordnet oder in dem Helm integriert.

Gemäß einer weiteren Ausführungsform umfasst die Anzeigevorrichtung eine Steuervorrichtung. Die Steuervorrichtung umfasst vorzugsweise eine Schnittstelleneinrichtung oder Datenschnittstelle, welche zumindest zur Kopplung des Displays eingerichtet ist. Des Weiteren kann die Schnittstelleneinrichtung auch eine oder mehrere Schnittstellen umfassen, beispielsweise eine USB-Schnittstelle und/oder eine Bluetooth-Schnittstelle, welche zur Kopplung externer Geräte oder Sensoren eingerichtet sind.

Außerdem kann die Steuervorrichtung auch eine Datenverarbeitungseinrichtung, wie einen Mikroprozessor, umfassen, welche beispielsweise die Ansteuer-Einheit integriert.

Des Weiteren umfasst die Steuervorrichtung vorzugsweise eine Kommunikationseinrichtung zur Datenkommunikation mit zumindest dem Führungssystem. Über vorgenannte Schnittstelleneinrichtung oder Datenschnittstelle können auch ein oder mehrere Sensoren angebunden werden. Beispiele für solche Sensoren umfassen ein Gyroskop, einen Lichtsensor, ein Mikrophon, eine Umgebungsgeräuschunterdrückung und/oder einen Kompass.

Die jeweilige Einheit, zum Beispiel die Ansteuer-Einheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer oder als Mikroprozessor, ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikations-Netzwerk durch die Übertragung einer entsprechenden Datei mit dem Computerprogrammprodukt oder dem Computerprogramm-Mittel erfolgen.

Gemäß einem zweiten Aspekt wird eine Anordnung mit einem Führungssystem zum Führen einer Mehrzahl von Einsatzkräften und einer Mehrzahl von Anzeigevorrichtungen vorgeschlagen, wobei der jeweiligen Einsatzkraft eine der Anzeigevorrichtungen zugeordnet ist. Die jeweilige Anzeigevorrichtung ist gemäß dem ersten Aspekt oder einer der Ausführungsformen des ersten Aspekts ausgebildet.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Im Weiteren wird die Erfindung anhand von bevorzugten Ausführungsbeispielen unter Bezugnahme auf die beigelegten Figuren näher erläutert.
- Fig. 1: zeigt ein schematisches Blockschaltbild eines ersten Ausführungsbeispiels einer Anzeigevorrichtung für eine Einsatzkraft;
- Fig. 2: zeigt eine vergrößerte Ansicht des Displays der Anzeigevorrichtung nach Fig. 1;
- Fig. 3: zeigt ein schematisches Blockschaltbild eines zweiten Ausführungsbeispiels einer Anzeigevorrichtung für eine Einsatzkraft;
- Fig. 4: zeigt ein schematisches Blockschaltbild eines dritten Ausführungsbeispiels einer Anzeigevorrichtung für eine Einsatzkraft;
- Fig. 5: zeigt ein schematisches Blockschaltbild eines vierten Ausführungsbeispiels einer Anzeigevorrichtung für eine Einsatzkraft; und
- Fig. 6: zeigt ein schematisches Blockschaltbild eines Ausführungsbeispiels einer Anordnung mit einem Führungssystem zum Führen einer Mehrzahl von Einsatzkräften und mit einer Mehrzahl von Anzeigevorrichtungen.

In den Figuren sind gleiche oder funktionsgleiche Elemente mit denselben Bezugszeichen versehen worden, sofern nichts anderes angegeben ist.

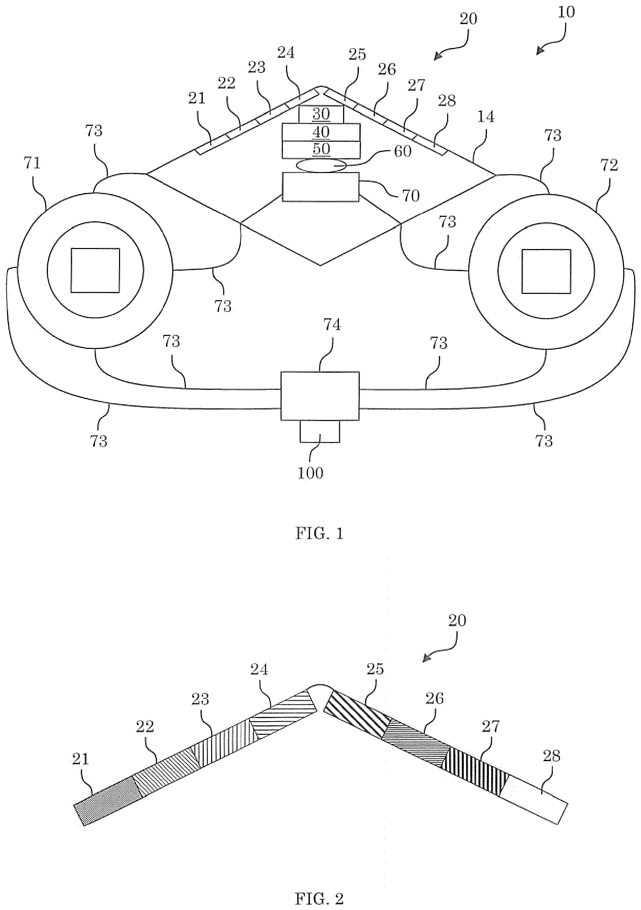

In Fig. 1 ist ein schematisches Blockschaltbild eines ersten Ausführungsbeispiels einer Anzeigevorrichtung 10 für eine Einsatzkraft dargestellt.

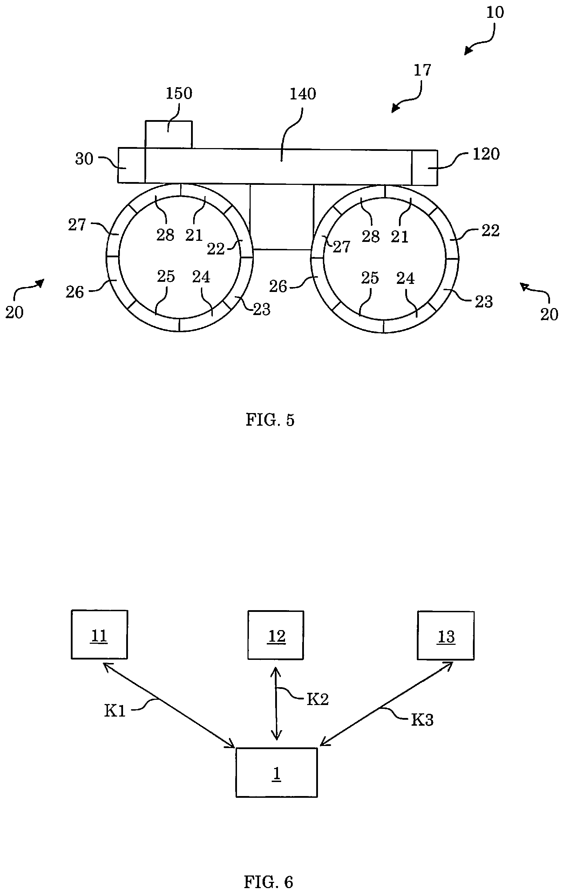

Die Anzeigevorrichtung 10 der Fig. 1 ist als eine vor dem Gesicht der Einsatzkraft tragbare textile Maske 14 ausgebildet, welche zur Anzeige von Informations-Inhalten verschiedener Informations-Typen eines Führungssystems 1 (siehe Fig. 6) eingerichtet ist. Hierzu weist die Maske 14 der Fig. 1 ein Display 20 auf, welches eine Mehrzahl von visuell unterscheidbaren Segmenten 21 - 28 umfasst. Die visuell unterscheidbaren Segmente 21 - 28 des Displays 20 sind bei einem Tragen der Maske 14 durch die Einsatzkraft in einem peripheren Sichtfeld der Einsatzkraft angeordnet. Die Segmente 21 - 28 sind insbesondere einzeln ansteuerbar. Jedes der Segmente 21- 28 ist zumindest einem der Informations-Typen zugewiesen. Das jeweilige Segmente 21 - 28 ist zur visuellen Ausgabe eines aktuellen Informations-Inhalts des dem Segment 21- 28 zugewiesenen Informations-Typs eingerichtet.

Die Maske 14 der Fig. 1 umfasst ferner eine Ansteuer-Einheit 30, welche mit dem Führungssystem 1 (siehe Fig. 6) zum Austausch von Daten koppelbar ist und zum Ansteuern des Displays 20 eingerichtet ist. Hierbei ist die Ansteuer-Einheit 30 insbesondere dazu eingerichtet, Signale, beispielsweise Funksignale, aufweisend die aktuellen Informations-Inhalte für die Informations-Typen von dem Führungssystem 1 zu empfangen und das Display 20 mittels in Abhängigkeit der empfangenen Signale generierter Ansteuer-Befehle zur visuellen Ausgabe der aktuellen Informations-Inhalte anzusteuern.

Die Ansteuer-Einheit 30 ist beispielsweise Teil einer Steuervorrichtung, wie beispielsweise einem Mikroprozessor. Insbesondere ist die Ansteuer-Einheit 30 in dem Textil der Maske 14 verwebt. Eben solches gilt für die im Weiteren diskutierten Einheiten 40 - 70.

Ferner kann die Ansteuer-Einheit 30 auch dazu eingerichtet sein, die Informations-Typen auf die Segmente 21 - 28 zuzuweisen. Diese Zuweisung kann insbesondere auch dynamisch erfolgen, beispielsweise in Abhängigkeit einer Position der Einsatzkraft und/oder einer Kopfausrichtung der Einsatzkraft.

Ferner ist die Ansteuer-Einheit 30 dazu eingerichtet, eine Darstellungs-Art für den jeweiligen Informations-Typ durch das zugewiesene Segmente 21 - 28 zu bestimmen. Die Darstellungs-Art umfasst beispielsweise die Farbe der Darstellung und/oder eine Puls-Frequenz der Darstellung.

Ferner umfasst die Maske 14 eine Bestimmungs-Einheit 40 und eine Ermittlungs-Einheit 50. Die Bestimmungs-Einheit 40 ist dazu eingerichtet, die Kopfausrichtung der Einsatzkraft zu bestimmen. Die Bestimmungs-Einheit 40 umfasst beispielsweise einen Kompass und/oder ein Gyrometer. Die Ermittlungs-Einheit 50 ist dazu eingerichtet die Position der Einsatzkraft zu ermitteln. Beispielsweise umfasst die Ermittlungs-Einheit 50 einen GPS-Empfänger. Ferner umfasst die Maske 14 einen Luftdurchlass 60 sowie ein Mikrophon 70.

Des Weiteren ist die Maske 14 vorzugsweise über eine Anzahl von Riemen 73 mit zwei Kopfhörern 71, 72 für die Ohren der Einsatzkraft und über weitere Riemen 73 zum Spannen der Kopfhörer 71, 72 und der Maske 14 über den Kopf der Einsatzkraft verbunden. Über das Mikrophon 70 und die Kopfhörer 71, 72 kann die Einsatzkraft mit dem Führungssystem 1 über Sprache kommunizieren. Die Segmente 21 - 28 des Displays 20 sind bei dem Tragen der Maske 14 derart angeordnet, dass sie ausschließlich in dem peripheren Sichtfeld der Einsatzkraft und insbesondere nicht in dem aktiven Sichtfeld der Einsatzkraft angeordnet sind.

Zur Verbindung der Riemen 73 am Hinterkopf der Einsatzkraft ist eine Verbindungseinrichtung 74, beispielsweise eine Schnalle, vorgesehen. An der Verbindungsvorrichtung 74 kann eine Datenschnittstelle 100 vorgesehen sein. Die Datenschnittelle ist beispielweise eine USB-Schnittstelle.

In Fig. 2 ist eine vergrößerte Ansicht des Displays 20 der Anzeigevorrichtung 10 nach Fig. 1 dargestellt. Die Fig. 2 zeigt, dass die Segmente 21 - 27 unterschiedliche Schraffuren aufweisen. Eine jede unterschiedliche Schraffur repräsentiert einen unterschiedlichen Informations-Typ. Das Segment 28 ist in dem Beispiel der Fig. 2 für die Anzeige externer Befehle des Führungssystems 1 für die Einsatzkraft vorgesehen und in der Fig. 2 ohne Schraffur versehen.

Die Segmente 21 - 28 sind in einer Reihe angeordnet, welche auch eine Ecke oder Krümmung aufweisen kann. Die Reihe der Segmente 21 - 28 bildet vorzugsweise ein horizontales Sichtbild der Einsatzkraft mittels der visuellen Ausgabe der Informations-Inhalte der den Segmenten 21 - 28 zugewiesenen Informations-Typen ab.

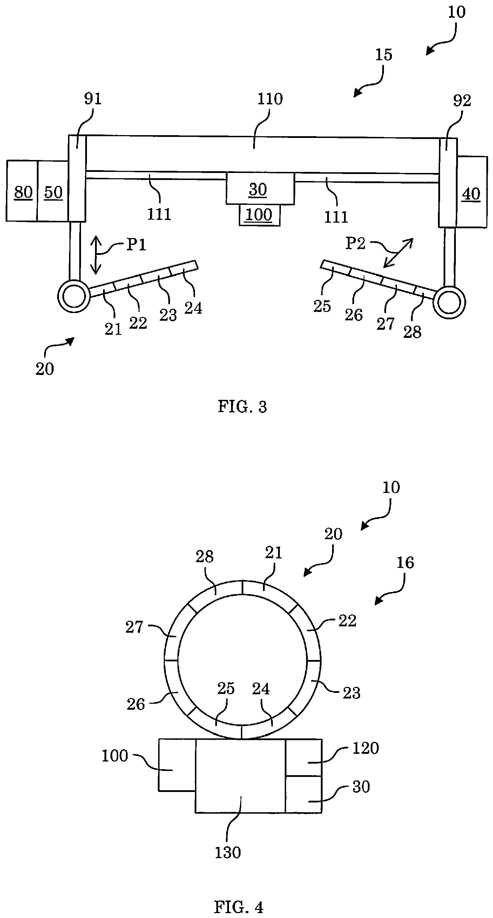

Fig. 3 zeigt ein schematisches Blockschaltbild eines zweiten Ausführungsbeispiels einer Anzeigevorrichtung 10 für eine Einsatzkraft. Die Anzeigevorrichtung 10 der Fig. 3 ist als eine Brille 15 für die Einsatzkraft ausgebildet. Das Display 20 der Anzeigevorrichtung der Fig. 3 umfasst zwei Reihen an Segmenten 21 - 24 und 25 - 28. Hinsichtlich der Merkmale und Eigenschaften der Segmente 21 - 28 des Displays 20 der Fig. 3 gilt das zu den Segmenten 21 - 28 der Fig. 1 Gesagte entsprechend.

Die Brille 15 umfasst eine Fixier-Einrichtung 110 zum Fixieren der Brille 15. An der Fixier-Einrichtung 110 sind Stabilisierungsplatten 91, 92 für das Tragen der beiden Reihen an Segmenten 21 - 24 und 25 - 28 angebracht. Die Pfeile P1 und P2 illustrieren eine Einstellmöglichkeit der Reihen an Segmenten 21 - 24 und 25 - 28 in y-Richtung und in z-Richtung. Des Weiteren umfasst die Fixier-Einrichtung 110 vorzugsweise eine Einstellungsmöglichkeit in x-Richtung. Die Ansteuer-Einheit 30 der Anzeigevorrichtung 10 der Fig. 3 ist mit einer Datenschnittstelle 100 gekoppelt und über Kommunikationsverbindungen 111 mit einer Bestimmungs-Einheit 40, einer Ermittlungs-Einheit 50 und einem Lichtsensor 80 verbindbar.

Fig. 4 zeigt ein schematisches Blockschaltbild eines dritten Ausführungsbeispiels einer Anzeigevorrichtung 10 für eine Einsatzkraft. Die Anzeigevorrichtung 10 der Fig. 4 ist als ein Richtsystem 16 für eine Waffe ausgebildet. Das Display 20 mit den visuell unterscheidbaren Segmenten 21 - 28 der Anzeigevorrichtung 10 der Fig. 4 ist ringartig ausgebildet. Damit kann der Ring an Segmenten 21 - 28 beispielsweise in ein Zielfernrohr integriert sein. Hinsichtlich der Merkmale und Eigenschaften der Segmente 21 - 28 des Displays 20 der Fig. 4 gilt das zu den Segmenten 21 - 28 der Fig. 1 Gesagte entsprechend.

Das ringförmige Display 20 der Fig. 4 ist auf einem Waffenteil 130 montiert. An dem Waffenteil 130 sind beispielsweise die Auswerte-Einheit 30, eine Datenschnittstelle 100 und eine Energieversorgungseinrichtung 120, beispielsweise ein Akkumulator, angeordnet. Weitere Einrichtungen, die an dem Waffenteil 130 ebenfalls angeordnet sein können, sind beispielsweise mit Bezug zu den Fig. 1 und 3 beschrieben und umfassen beispielsweise eine Ermittlungs-Einheit 50 und eine Kommunikationsvorrichtung zur Kommunikation mit dem Führungssystem 1.

Fig. 5 zeigt ein schematisches Blockschaltbild eines vierten Ausführungsbeispiels einer Anzeigevorrichtung 10 für eine Einsatzkraft. Die Anzeigevorrichtung 10 der Fig. 5 umfasst zwei Ringe aus Segmenten 21 - 28 für die beiden Augen der Einsatzkraft. Hinsichtlich der Merkmale und Eigenschaften der Segmente 21 - 28 des Displays 20 der Fig. 5 gilt das zu den Segmenten 21 - 28 der Fig. 1 Gesagte entsprechend.

Die beiden Ringe an Segmenten 21 - 28 sind an einem Trägerteil 140 befestigt. An dem Trägerteil 140 sind beispielsweise die Ansteuer-Einheit 30, eine Energieversorgungseinrichtung 120 und eine Kommunikationsrichtung 150 zur Kommunikation mit dem Führungssystem 1 vorgesehen. Weitere Einheiten, die an dem Trägerteil 140 befestigt sein können, ergeben sich beispielsweise aus den Fig. 1, 3 und 4.

Weitere Ausführungsbeispiele für Anzeigevorrichtungen 10 ergeben sich aus Kombinationen der Ausführungsbeispiele der Fig. 1, 3, 4 und 5.

Fig. 6 zeigt ein schematisches Blockschaltbild eines Ausführungsbeispiels einer Anordnung mit einem Führungssystem 1 zum Führen einer Mehrzahl von Einsatzkräften und einer Mehrzahl von Anzeigevorrichtungen 11, 12, 13.

Das Führungssystem 1 ist über Kommunikationsverbindungen K1, K2, K3 mit den Anzeigevorrichtungen 11, 12 und 13 koppelbar. Die jeweilige Anzeigevorrichtung 11, 12, 13 ist einer jeweiligen Einsatzkraft zugeordnet. Die jeweilige Kommunikationsverbindung K1, K2, K3, beispielsweise die Kommunikationsverbindung K1 zwischen dem Führungssystem 1 und der Anzeigevorrichtung 11, ist beispielsweise als eine Funkschnittstelle ausgebildet. Die jeweilige Anzeigevorrichtung 11, 12, 13 ist beispielsweise wie eine der Anzeigevorrichtungen 10 der Fig. 1, 3, 4 oder 5 ausgebildet.

Obwohl die vorliegende Erfindung anhand von Ausführungsbeispielen beschrieben wurde, ist sie vielfältig modifizierbar.

### BEZUGSZEICHENLISTE

- 1: Führungssystem
- 10: Anzeigevorrichtung
- 11: Anzeigevorrichtung
- 12: Anzeigevorrichtung
- 13: Anzeigevorrichtung
- 14: Maske
- 15: Brille
- 16: Richtsystem
- 17: Fernglas
- 20: Display
- 21: Segment
- 22: Segment
- 23: Segment
- 24: Segment
- 25: Segment
- 26: Segment
- 27: Segment
- 28: Segment
- 30: Ansteuer-Einheit
- 40: Bestimmungs-Einheit
- 50: Ermittlungs-Einheit
- 60: Luftdurchlass
- 70: Mikrophon
- 71: Kopfhörer
- 72: Kopfhörer
- 73: Riemen
- 74: Verbindungseinrichtung
- 80: Lichtsensor
- 91: Stabilisationsplatte
- 92: Stabilisationsplatte
- 100: Datenschnittstelle
- 110: Fixier-Einrichtung
- 120: Energieversorgungseinrichtung
- 130: Waffenteil
- 140: Trägerteil
- 150: Kommunikationseinrichtung

- P1: Einstellung in y-Richtung
- P2: Einstellung in z-Richtung
- K1: Kommunikations-Verbindung
- K2: Kommunikations-Verbindung
- K3: Kommunikations-Verbindung

## Patentansprüche

1. Anzeigevorrichtung (10 - 13) für eine Einsatzkraft zur Anzeige von Informations-Inhalten verschiedener Informations-Typen eines Führungssystems (1), mit
einem durch die Einsatzkraft tragbaren Display (20) aufweisend eine Mehrzahl von visuell unterscheidbaren Segmenten (21 - 28), wobei einem jeden der Segmente (21 - 28) zumindest einer der Informations-Typen zugewiesen ist, wobei das jeweilige Segment (21 - 28) zur visuellen Ausgabe eines aktuellen Informations-Inhalts des dem Segment (21 - 28) zugewiesenen Informations-Typs eingerichtet ist, und
einer mit dem Führungssystem (1) koppelbaren Ansteuer-Einheit (30) zum Ansteuern des Displays (20),
wobei die Anzeigevorrichtung (10 - 13) als eine vor dem Gesicht der Einsatzkraft tragbare Maske (14) ausgebildet ist, wobei die visuell unterscheidbaren Segmente (21 - 28) bei einem Tragen der Maske (14) durch die Einsatzkraft in einem peripheren Sichtfeld der Einsatzkraft angeordnet sind, oder
wobei die Anzeigevorrichtung (10 - 13) als eine durch die Einsatzkraft tragbare Brille (15) oder Brillen-Erweiterung ausgebildet ist, wobei die visuell unterscheidbaren Segmente (21 - 28) bei einem Tragen der Brille (15) oder der Brillen-Erweiterung in einem peripheren Sichtfeld der Einsatzkraft angeordnet sind, und wobei eine Anzahl der Segmente der Mehrzahl von visuell unterscheidbaren Segmenten (21 - 28) dazu eingerichtet ist, einen Bereich außerhalb des Sichtbildes der Einsatzkraft, insbesondere einen Bereich hinter der Einsatzkraft, mittels der visuellen Ausgabe der Informations-Inhalte der den Segmenten der Anzahl zugewiesenen Informations-Typen abzubilden.

2. Anzeigevorrichtung nach Anspruch 1,
**dadurch gekennzeichnet,**
**dass** die Ansteuer-Einheit (30) dazu eingerichtet ist, Signale aufweisend die aktuellen Informations-Inhalte für die Informations-Typen von dem Führungssystem (1) zu empfangen und das Display (20) mittels in Abhängigkeit der empfangenen Signale generierter Ansteuer-Befehle zur visuellen Ausgabe der aktuellen Informations-Inhalte anzusteuern.

3. Anzeigevorrichtung nach Anspruch 1 oder 2,
**dadurch gekennzeichnet,**
**dass** die Ansteuer-Einheit (30) zur Zuweisung der Informations-Typen auf die Segmente (21 - 28) des Displays (20) eingerichtet ist.

4. Anzeigevorrichtung nach Anspruch 3,
**dadurch gekennzeichnet,**
**dass** die Ansteuer-Einheit (30) ferner dazu eingerichtet ist, eine Darstellungs-Art für den jeweiligen, einem der Segmente (21 - 28) zugewiesenen Informations-Typen zu bestimmen.

5. Anzeigevorrichtung nach einem der Ansprüche 1 - 4,
**dadurch gekennzeichnet,**
**dass** die Ansteuer-Einheit (30) dazu eingerichtet ist, die Informations-Typen auf die Segmente (21 - 28) in Abhängigkeit eines von dem Führungssystem (1) übermittelten externen Steuerbefehls, einer bestimmten Kopfausrichtung der Einsatzkraft und/oder einer ermittelten Position der Einsatzkraft zuzuweisen.

6. Anzeigevorrichtung nach Anspruch 5,
**gekennzeichnet durch**
eine Bestimmungs-Einheit (40) zum Bestimmen der Kopfausrichtung der Einsatzkraft, wobei die Bestimmungs-Einheit (40) einen Kompass und/oder ein Gyrometer umfasst, und
eine Ermittlungs-Einheit (50) zum Ermitteln der Position der Einsatzkraft.

7. Anzeigevorrichtung nach einem der Ansprüche 1 - 6,
**dadurch gekennzeichnet,**
**dass** die Ansteuer-Einheit (30) dazu eingerichtet ist, einem bestimmten Segment (21 - 28) der Mehrzahl von Segmenten (21 - 28) einen ersten Informations-Typ und zumindest einen zweiten Informations-Typ zuzuweisen.

8. Anzeigevorrichtung nach einem der Ansprüche 1 - 7,
**dadurch gekennzeichnet,**
**dass** die Mehrzahl von visuell unterscheidbaren Segmenten (21 - 28) in einer Reihe angeordnet ist.

9. Anzeigevorrichtung nach Anspruch 8,
**dadurch gekennzeichnet,**
**dass** die Reihe der Segmente (21 - 28) dazu eingerichtet ist, ein horizontales Sichtbild der Einsatzkraft mittels der visuellen Ausgabe der Informations-Inhalte der den Segmenten (21 - 28) zugewiesenen Informations-Typen abzubilden.

10. Anzeigevorrichtung nach Anspruch 1,
**dadurch gekennzeichnet,**
**dass** die Brille (15) oder die Brillen-Erweiterung derart ausgebildet ist, dass eine Ausrichtung der Segmente (21 - 28) in x-Richtung, in y-Richtung und/oder in z-Richtung einstellbar ist.

11. Anzeigevorrichtung nach einem der Ansprüche 1 - 10,
**dadurch gekennzeichnet,**
**dass** ein jedes Segment der beiden äußeren Segmente der Mehrzahl von visuell unterscheidbaren Segmenten (21 - 28) dazu eingerichtet ist, einen bestimmten Bereich außerhalb des Sichtbildes der Einsatzkraft, insbesondere einen Bereich hinter der Einsatzkraft, mittels der visuellen Ausgabe der Informations-Inhalte der dem jeweiligen Segment zugewiesenen Informations-Typen abzubilden.

12. Anzeigevorrichtung nach einem der Ansprüche 1-11,
**dadurch gekennzeichnet,**
**dass** die Mehrzahl von visuell unterscheidbaren Segmenten (21 - 28) an einem Helm für die Einsatzkraft angeordnet ist oder in dem Helm integriert ist.

13. Anordnung mit einem Führungssystem (1) zum Führen einer Mehrzahl von Einsatzkräften und mit einer Mehrzahl von Anzeigevorrichtungen (11 - 13) nach einem der Ansprüche 1 bis 12, wobei der jeweiligen Einsatzkraft eine der Anzeigevorrichtungen (11 - 13) zuordenbar ist.

## Claims

1. An indicator device (10 - 13) for a deployment operator for displaying information contents of different information types of a guidance system (1), comprising:
a display (20) portable by the deployment operator, comprising multiple visually distinguishable segments (21 - 28), each of the segments (21 - 28) being assigned at least one of the information types, the respective segment (21 - 28) being arranged for visual output of a current information content of the information type assigned to the segment (21 - 28), and
a drive unit (30), which can be coupled to the guidance system (1), for driving the display (20),
wherein the indicator device (10 - 13) is formed as a mask (14) wearable in front of the face of the deployment operator, wherein the visually distinguishable segments (21 - 28) are arranged in a peripheral field of view of the deployment operator when the mask (14) is worn by the deployment operator, or
wherein the indicator device (10 - 13) is formed as a pair of goggles (15) or goggle extension wearable by the deployment operator, wherein the visually distinguishable segments (21 - 28) are arranged in a peripheral field of view of the deployment operator when the goggles (15) or goggle extension are worn, and wherein a number of the segments of the multiple visually distinguishable segments (21 - 28) is arranged to image an area outside the field of view of the deployment operator, in particular an area behind the deployment operator, by means of the visual output of the information contents of the information types assigned to the segments of the number of segments.

2. The indicator device according to claim 1,
**characterized in that**
the drive unit (30) is configured to receive signals comprising the current information contents for the information types from the guidance system (1) and to drive the display (20) by means of drive commands for the visual output of the current information contents generated as a function of the received signals.

3. The indicator device according to claim 1 or 2,
**characterized in that**
the drive unit (30) is set up for allocating the information types to the segments (21 - 28) of the display (20).

4. The indicator device according to claim 3,
**characterized in that**
the drive unit (30) is further configured to determine a representation type for the respective information type assigned to one of the segments (21 - 28).

5. The indicator device according to any one of claims 1 - 4,
**characterized in that**
the drive unit (30) is configured to assign the information types to the segments (21 - 28) as a function of an external control command transmitted by the guidance system (1), a specific head orientation of the deployment operator and/or a determined position of the deployment operator.

6. The indicator device according to claim 5,
**characterized by**
an identification unit (40) for identifying the head orientation of the deployment operator, the identification unit (40) comprising a compass and/or a gyrometer, and
a determination unit (50) for determining the position of the deployment operator.

7. The indicator device according to any one of claims 1 - 6,
**characterized in that**
the drive unit (30) is adapted to assign a first type of information and at least a second type of information to a particular segment (21 - 28) of the multiple segments (21 - 28).

8. The indicator device according to any one of claims 1 - 7,
**characterized in that**
the multiple visually distinguishable segments (21 - 28) are arranged in a row.

9. The indicator device according to claim 8,
**characterized in that**
the row of segments (21 - 28) is configured to map a horizontal visual image of the deployment operator by means of the visual output of the information contents of the information types assigned to the segments (21 - 28).

10. The indicator device according to claim 1,
**characterized in that**
the goggles (15) or the goggle extension is designed in such a way that an orientation of the segments (21 - 28) is adjustable in x-direction, in y-direction and/or in z-direction.

11. The indicator device according to one of the claims 1 - 10,
**characterized in that**
each segment of the two outer segments of the multiple visually distinguishable segments (21 - 28) is configured to image a certain area outside the visual image of the deployment operator, in particular an area behind the deployment operator, by means of the visual output of the information contents of the information types assigned to the respective segment.

12. The indicator device according to one of the claims 1 - 11,
**characterized in that**
the multiple visually distinguishable segments (21 - 28) is arranged on a helmet for the deployment operator or is integrated in the helmet.

13. An arrangement having a guidance system (1) for commanding multiple deployment operators and having multiple indicator devices (11 - 13) according to one of claims 1 to 12, wherein one of the indicator devices (11 - 13) can be assigned to the respective deployment operators.

## Revendications

1. Dispositif d'affichage (10-13) destiné à un opérateur pour afficher des contenus d'informations de différents types d'informations d'un système de guidage (1), comprenant
un écran (20) portable par l'opérateur, comprenant plusieurs segments (21 - 28) pouvant être distingués visuellement, chacun des segments (21 - 28) étant affecté à au moins un des types d'information, le segment respectif (21 - 28) étant agencé pour la sortie visuelle d'un contenu d'information actuel du type d'information affecté au segment (21 - 28), et
une unité d'entraînement (30), qui peut être couplée au système de guidage (1), pour entraîner l'écran (20),
dans lequel le dispositif d'affichage (10 - 13) est formé comme un masque (14) pouvant être porté devant le visage de l'opérateur, dans lequel les segments visuellement distinguables (21 - 28) sont disposés dans un champ de vision périphérique de l'opérateur lorsque le masque (14) est porté par l'opérateur, ou
dans lequel le dispositif d'affichage (10 - 13) est formé comme une paire de lunettes (15) ou une extension de lunettes pouvant être porté par l'opérateur, dans lequel les segments visuellement distinguables (21 - 28) sont disposés dans un champ de vision périphérique de l'opérateur lorsque les lunettes (15) ou l'extension de lunettes sont portées,
et dans lequel un certain nombre des segments des plusieurs segments visuellement distinguables (21 - 28) sont agencés pour représenter une zone en dehors du champ de vision de l'opérateur, en particulier une zone derrière l'opérateur, au moyen de la sortie visuelle des contenus d'informations des types d'informations affectés aux segments du nombre.

2. Dispositif d'affichage selon la revendication 1,
**caractérisé en ce que**
l'unité de commande (30) est conçue pour recevoir du système de guidage (1) des signaux comprenant les contenus d'information actuels pour les types d'information et pour commander l'écran (20) au moyen d'instructions de commande pour la sortie visuelle des contenus d'information actuels générées en fonction des signaux reçus.

3. Dispositif d'affichage selon la revendication 1 ou 2,
**caractérisé en ce que**
l'unité d'entraînement (30) est conçue pour attribuer les types d'informations aux segments (21 - 28) de l'écran (20).

4. Dispositif d'affichage selon la revendication 3,
**caractérisé en ce que**
l'unité de commande (30) est en outre adaptée pour déterminer un type de représentation pour le type d'information respectif attribué à l'un des segments (21 - 28).

5. Dispositif d'affichage selon l'une quelconque des revendications 1 - 4,
**caractérisé en ce que**
l'unité d'entraînement (30) est agencée pour affecter les types d'informations aux segments (21 - 28) en fonction d'une commande de contrôle externe transmise par le système de guidage (1), d'une orientation déterminée de la tête de l'opérateur et/ou d'une position déterminée de l'opérateur.

6. Dispositif d'affichage selon la revendication 5,
**caractérisé par**
une unité d'identification (40) pour identifier l'orientation de la tête de l'opérateur, l'unité d'identification (40) comprenant un compas et/ou un gyromètre, et
une unité de détermination (50) pour déterminer la position de l'opérateur.

7. Dispositif d'affichage selon l'une quelconque des revendications 1 à 6,
**caractérisé en ce que**
l'unité d'entraînement (30) est adaptée pour attribuer un premier type d'information et au moins un deuxième type d'information à un segment particulier (21 - 28) des plusieurs segments (21 - 28).

8. Dispositif d'affichage selon l'une quelconque des revendications 1 - 7,
**caractérisé en ce que**
les plusieurs segments visuellement distinguables (21 - 28) sont disposés dans une ligne.

9. Dispositif d'affichage selon la revendication 8,
**caractérisé en ce que**
la rangée de segments (21 - 28) est configurée pour cartographier une image visuelle horizontale de l'opérateur au moyen de la sortie visuelle des contenus d'information des types d'information affectés aux segments (21 - 28).

10. Dispositif d'affichage selon la revendication 1,
**caractérisé en ce que**
les lunettes (15) ou l'extension de lunettes sont conçues de telle sorte qu'une orientation des segments (21 - 28) dans la direction x, dans la direction y et/ou dans la direction z est réglable.

11. Dispositif d'affichage selon l'une des revendications 1 à 10,
**caractérisé en ce que**
chaque segment des deux segments extérieurs des plusieurs segments visuellement distinguables (21 - 28) est agencé pour représenter une certaine zone en dehors de l'image visuelle de l'opérateur, en particulier une zone derrière l'opérateur, au moyen de la sortie visuelle des contenus d'information des types d'information affectés au segment respectif.

12. Dispositif d'affichage selon l'une quelconque des revendications 1 - 11,
**caractérisé en ce que**
les plusieurs segments visuellement distinguables (21 - 28) sont disposées sur un casque pour l'opérateur ou sont intégrées dans le casque.

13. Agencement avec un système de guidage (1) pour le guidage de plusieurs opérateurs et avec plusieurs dispositifs d'affichage (11 - 13) selon l'une des revendications 1 à 12, l'un des dispositifs d'affichage (11 - 13) pouvant être affecté à l'opérateur respectif.
